(19)

Europäisches
Patentamt
European
Patent Office
Office européen
des brevets

(11) **EP 3 591 563 A1**

(12) **EUROPEAN PATENT APPLICATION**

(43) Date of publication:
08.01.2020 Bulletin 2020/02

(51) Int Cl.:
*G06F 21/64* (2013.01)  *H04L 29/06* (2006.01)
*H04L 9/32* (2006.01)

(21) Application number: 18181654.7

(22) Date of filing: 04.07.2018

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Koninklijke Philips N.V.
5656 AE Eindhoven (NL)**

(72) Inventors:
• **XIA, Fubiao**
  **5656 AE Eindhoven (NL)**
• **GE, Xin**
  **5656 AE Eindhoven (NL)**
• **QU, Jin**
  **5656 AE Eindhoven (NL)**

(74) Representative: **de Haan, Poul Erik et al
Philips International B.V.
Philips Intellectual Property & Standards
High Tech Campus 5
5656 AE Eindhoven (NL)**

(54) **VERIFYING THE INTEGRITY OF A PLURALITY OF DATA BLOCKS**

(57)   According to an aspect, there is provided a computer-implemented method of operating a first device to verify the integrity of a plurality of data blocks stored by a second device, the method comprising (i) obtaining hash values for each of a plurality of modified data blocks, wherein each modified data block is a combination of one of the data blocks and a first random value from a first set of random values, and each hash value is the result of applying a hash function to a respective modified data block; (ii) determining a second set of random values, wherein the second set comprises a respective second random value for each of the data blocks; (iii) determining a combination of the first set of random values and the second set of random values; (iv) sending, to the second device, the second set of random values and the combination of the first set of random values and the second set of random values; (v) receiving, from the second device, a first integrity verification hash value, the integrity verification hash value relating to the plurality of data blocks; (vi) determining a second integrity verification hash value from the hash values for each of the modified data blocks and the second set of random values; and (vii) verifying the integrity of the plurality of data blocks if the first integrity verification hash value matches the second integrity verification hash value.

Fig. 2

EP 3 591 563 A1

**Description**

FIELD OF THE INVENTION

This disclosure relates to the storage of data blocks by a device on behalf of another device, and in particular relates to techniques for enabling the integrity of the stored data blocks to be verified.

BACKGROUND OF THE INVENTION

It is becoming increasingly common for individuals, groups and companies to store their electronic data 'in the cloud'. That is, companies provide data storage services to clients and users accessible via the Internet so that the clients and users do not have to store the electronic data (or all of the electronic data) locally. Alternatively the data storage services can be used to store a backup copy of the electronic data to protect against data loss on the client or user side.

In a cloud storage system, the Cloud Storage Provider (CSP) may act as an untrusted server or even a malicious adversary, and may modify or even delete the user's stored data (whether intentionally or unintentionally). For instance, to save money and storage space, the CSP might neglect to keep or deliberately delete rarely accessed data files which belong to an ordinary user (e.g. an individual). On the other hand, the user could experience constraints on their ability to use resources when dealing with computation and communication of large amounts of data.

Therefore, it is desirable for a user to be able to check the integrity of data stored by a CSP. That is, it is desirable for a user to be able to check that the CSP has (and still has) stored the required data and/or that the data has not become corrupted or modified (without the user's knowledge).

SUMMARY OF THE INVENTION

Existing techniques for addressing the above need have various drawbacks. One simple method is to use hash functions. As is known, a hash function can be used to generate a hash value from an input, and the hash function is such that it is difficult to reconstruct the input simply from knowing the hash value. Assuming that a data file has been separated into multiple data blocks (which can also be referred to as "message blocks"), the main idea is that the user pre-computes a hash value for each data block, and stores all the hash values locally. After the data file has been sent to the CSP for storage, the user is able to check the integrity of any data block by requesting the hash value for the relevant data block from the CSP. If the CSP has modified or deleted the challenged data block, the CSP will be unable to compute the correct hash value due to the cryptographic property of hash functions. However, the CSP can easily cheat or deceive the user by computing and storing hash values for each data block before deleting or modifying the data block/data file.

Another method uses a combination of inputs to the hash function. The user can pre-compute hash values for combinations of data blocks, for example $H(m_1 + m_2)$ is a hash value determined using a hash function $H$ of a combination of data blocks $m_1$ and $m_2$. The user can check the integrity of $m_1$ or $m_2$ by asking the CSP to provide the value of $H(m_1 + m_2)$. Since the CSP may not be able to predicate the challenge, the only way to provide the correct hash values of $(m_1 + m_2)$ is to honestly compute $H(m_1 + m_2)$. However, this method suffers from a limited number of possible verifications since all the hash values have to be pre-computed by the user (since the user typically does not store or continue to store the data blocks after providing them to the CSP). As a result, the CSP can predicate the limited number of possibilities and pre-compute the hash values that may be requested by the user.

Another method to overcome these disadvantages was proposed in the paper "Provable Data Possession Scheme based on Homomorphic Hash Function in Cloud Storage" by Li Yu, Junyao Ye and Kening Liu, ACSIJ Advances in Computer Science: an International Journal, Vol. 5, Issue 1, No. 19, January 2016. This method uses homomorphic hash functions and random numbers, and it is suggested that this method supports an unlimited number of verifications making prediction by the CSP difficult. However, this method does not treat the homomorphic hash function as a real hash function and publish the public parameters for the hash function. In fact, the method hides the underlying generators of the finite group in the homomorphic hash function, and treats it as a kind of "encryption" function. In any case, a CSP acting as an adversary may still be able to pass the verification directly and be able to modify or delete an arbitrary data block without the user knowing.

Therefore there is a need for improved techniques for enabling a user to check the integrity of data stored by a CSP.

According to a first specific aspect, there is provided a computer-implemented method of operating a first device to verify the integrity of a plurality of data blocks stored by a second device, the method comprising (i) obtaining hash values for each of a plurality of modified data blocks, wherein each modified data block is a combination of one of the data blocks and a first random value from a first set of random values, and each hash value is the result of applying a hash function to a respective modified data block; (ii) determining a second set of random values, wherein the second set comprises a respective second random value for each of the data blocks; (iii) determining a combination of the first set of random values and the second set of random values; (iv) sending, to the second device, the second set of random values and the combination of the first set of random values and the second set of random values; (v) receiving, from the second device, a first integrity verification hash value, the integrity verification hash value relating to the plurality of data blocks; (vi) determining a second integrity verification hash value from the hash values for each of the modified data blocks and the second set of random values; and (vii) verifying the integrity of the plurality of data blocks if the first integrity verification hash value matches the second integrity verification hash value.

According to a second aspect, there is provided a computer-implemented method of operating a second device to verify the integrity of a plurality of data blocks stored by the second device to a first device, the method comprising (i) storing a plurality of data blocks; (ii) receiving, from the first device, a second set of random values and a combination of a first set of random values and the second set of random values, wherein the second set comprises a respective second random value for each of the data blocks; (iii) determining a first integrity verification hash value using a hash function that is applied to a combination of the plurality of data blocks, the second set of random values and the combination of the first set of random values and the second set of random values; and (iv) sending, to the first device, the first integrity verification hash value.

According to a third aspect, there is provided a first device for use in verifying the integrity of a plurality of data blocks stored by a second device, the first device comprising a processing unit configured to (i) obtain hash values for each of a plurality of modified data blocks, wherein each modified data block is a combination of one of the data blocks and a first random value from a first set of random values, and each hash value is the result of applying a hash function to a respective modified data block; (ii) determine a second set of random values, wherein the second set comprises a respective second random value for each of the data blocks; (iii) determine a combination of the first set of random values and the second set of random values; (iv) send, to the second device, the second set of random values and the combination of the first set of random values and the second set of random values; (v) receive, from the second device, a first integrity verification hash value, the integrity verification hash value relating to the plurality of data blocks; (vi) determine a second integrity verification hash value from the hash values for each of the modified data blocks and the second set of random values; and (vii) verify the integrity of the plurality of data blocks if the first integrity verification hash value matches the second integrity verification hash value.

According to a fourth aspect, there is provided a second device for use in verifying the integrity of a plurality of data blocks stored by the second device to a first device, the second device comprising a memory unit and a processing unit configured to (i) store a plurality of data blocks; (ii) receive, from the first device, a second set of random values and a combination of a first set of random values and the second set of random values, wherein the second set comprises a respective second random value for each of the data blocks; (iii) determine a first integrity verification hash value using a hash function that is applied to a combination of the plurality of data blocks, the second set of random values and the combination of the first set of random values and the second set of random values; and (iv) send, to the first device, the first integrity verification hash value.

According to a fifth aspect, there is provided a computer program product comprising a computer readable medium having computer readable code embodied therein, the computer readable code being configured such that, on execution by a suitable computer or processor, the computer or processor is caused to perform any of the method aspects described above.

These and other aspects will be apparent from and elucidated with reference to the embodiment(s) described hereinafter.

BRIEF DESCRIPTION OF THE DRAWINGS

Exemplary embodiments will now be described, by way of example only, with reference to the following drawings, in which:

Fig. 1 is a block diagram of an exemplary system according to various embodiments;
Fig. 2 is a signaling and flow diagram illustrating an exemplary embodiment of the techniques disclosed herein;
Fig. 3 is a flow chart illustrating an exemplary method of operating a first device; and
Fig. 4 is a flow chart illustrating an exemplary method of operating a second device.

DETAILED DESCRIPTION OF EMBODIMENTS

As noted above, it is desirable for a user (referred to as a "first device" herein) to be able to verify the integrity of data stored by another party (referred to as a "second device" herein). The first device may be the device that provided the data to the second device for storage, in which case the first device is verifying the integrity of its own data, or the data may have been provided to the second device by another device (e.g. a third device), and the first device can be a device that is tasked by the third device with verifying the integrity of data stored by the second device. The integrity of the data is considered to be verified if the data stored by the second device matches or corresponds to the data that the first device expects the second device to be storing. In terms of the techniques described herein, the integrity of the data is considered to be verified if a hash value derived or computed by the first device from the data stored at the second device matches a hash value derived or computed by the second device from the stored data.

The data stored in the second device can include one or more data files. A data file may be any type of data file, for example the data file may be a document, an image, a video, an executable file, or a data file for use by a program, etc. Each data file can be split into or comprise one or more data blocks (which can also be referred to as "message blocks").

The second device can be or be part of any type of device that stores data on behalf of another device. For example, the second device can be or be part of a cloud services provider (CSP) that provides data storage services to other parties accessible via the Internet or other types of network so that the other parties do not have to store the electronic data (or all of the electronic data) themselves. Alternatively the second device may be used to store a backup copy of the electronic data to protect against data loss on the client (first device or third device) side.

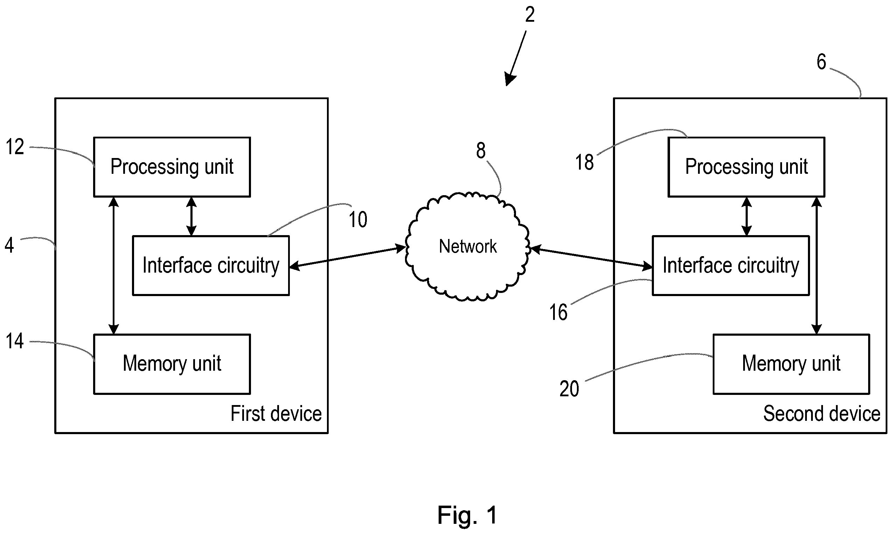

Fig. 1 is a block diagram of a system 2 in which the techniques and principles described herein may be implemented. The system 2 comprises a first device 4 (which is also referred to herein as a "user" or "user device"), and a second device 6 (which is also referred to herein as a "cloud services provider" or "CSP").

The first device 4 and second device 6 are interconnected via a network 8, such as the Internet, and thus may be located at respectively different locations. Of course, it will be appreciated that the second device 6 may be local to the first device 4, and interconnected via a wired or wireless connection.

The first device 4 and the second device 6 can be any type of electronic device or computing device that can connect to network 8. For example each of the first device 4 and second device 6 can be any of a computer (e.g. a server or desktop computer), a network data storage device (e.g. a network attached storage (NAS)), a laptop, a tablet computer, a smart phone, etc.

The first device 4 includes interface circuitry 10 for enabling a data connection to other devices, such as the second device 6. In particular the interface circuitry 10 can enable a connection between the first device 4 and the network 8, such as the Internet, via any desirable wired or wireless communication protocol, such as Ethernet, WiFi, Bluetooth, Zigbee, or any cellular communication protocol (including but not limited to Global System for Mobile Communications (GSM), Universal Mobile Telecommunications System (UMTS), Long Term Evolution (LTE), LTE-Advanced, etc.). The first device 4 further includes a processing unit 12 for performing operations on data and for generally controlling the operation of the first device 4. The first device 4 further includes a memory unit 14 for storing any data required for the execution of the techniques described herein and for storing computer program code for causing the processing unit 12 to perform method steps as described in more detail below.

The processing unit 12 can be implemented in numerous ways, with software and/or hardware, to perform the various functions described herein. The processing unit 12 may comprise one or more microprocessors or digital signal processor (DSPs) that may be programmed using software or computer program code to perform the required functions and/or to control components of the processing unit 12 to effect the required functions. The processing unit 12 may be implemented as a combination of dedicated hardware to perform some functions (e.g. amplifiers, pre-amplifiers, analog-to-digital convertors (ADCs) and/or digital-to-analog convertors (DACs)) and a processor (e.g., one or more programmed microprocessors, controllers, DSPs and associated circuitry) to perform other functions. Examples of components that may be employed in various embodiments of the present disclosure include, but are not limited to, conventional microprocessors, DSPs, application specific integrated circuits (ASICs), and field-programmable gate arrays (FPGAs).

The memory unit 14 can comprise any type of non-transitory machine-readable medium, such as cache or system memory including volatile and non-volatile computer memory such as random access memory (RAM) static RAM (SRAM), dynamic RAM (DRAM), read-only memory (ROM), programmable ROM (PROM), erasable PROM (EPROM), and electrically erasable PROM (EEPROM). The memory unit 14 maybe or comprise, for example, a memory chip, an optical disk (such as a compact disc (CD), a digital versatile disc (DVD) or a Blu-Ray disc), a hard disk, a tape storage solution, or a solid state device, including a memory stick, a solid state drive (SSD), a memory card, etc.

Fig. 1 also shows exemplary components of the second device 6. The second device 6 includes interface circuitry 16 for enabling a data connection to other devices, such as the first device 4. In particular the interface circuitry 16 can enable a connection between the second device 6 and the network 8, such as the Internet, via any desirable wired or wireless communication protocol. The second device 6 further includes a processing unit 18 for performing operations on data and for generally controlling the operation of the second device 6. The second device 6 further includes a memory unit 20 for storing any data required for the execution of the techniques described herein and for storing computer program code for causing the processing unit 18 to perform method steps as described in more detail below. The memory unit 20 is also for storing data on behalf of another device (e.g. the first device 4 or a third device), and thus the memory unit 20 in the second device 6 may be capable of storing a large quantity of data. As such, the memory unit 20 may comprise a number of memory components that are connected and/or operated together to provide a data storage service to other devices. Each memory component may be a memory chip, an optical disk (such as a compact disc (CD), a digital versatile disc (DVD) or a Blu-Ray disc), a hard disk, a tape storage solution, or a solid state device, including a memory stick, a solid state drive (SSD), a memory card, etc.

The processing unit 18 and memory unit 20 can be implemented in numerous ways, similar to the processing unit 12 and memory unit 14 in the first device 4.

In the techniques described herein, a homomorphic hash function is used as an underlying building block and random values are used to prevent a CSP from predicting the possible hash values. Considering one data file that can be split into multiple data blocks, a user device (e.g. the first device 4) would like to remotely check the integrity of any data block or any data blocks for the data file, and the user device 4 can use a homomorphic hash function and random values non-trivially to perform the tasks. It will be appreciated from the description below that the techniques are readily applicable to data blocks from multiple data files (or the same or different types).

In general, the user device 4 pre-computes the hash values of each data block with a random value (which is also referred to as a 'salt'), and the user device 4 stores all of the hash values along with the salts locally. These hash values can be referred to as 'salted hash values'. The hash values are kept secret from the second device 6. When checking or verifying the data blocks stored by the second device 6, the user device 4 selects some further random values, $R$, and sends the salts and $R$ to the CSP 6.

The user device 4 can compute a target hash value (i.e. a hash value that the CSP 6 should also compute) using the pre-computed hash values and $R$. To compute a hash value that matches the target hash value, the CSP 6 is required to honestly compute a hash input, say $T$, which is a combination of the salts with the data blocks, and the further random values $R$. The CSP 6 then returns the hash of $T$ to the user device 4. If the returned hash value does not match the target hash value then the user device 4 will know that the CSP 6 did not calculate the hash value from the correct data blocks, for example because the data blocks have been deleted or modified.

The techniques described herein also support so-called 'data dynamics', which means that the verification can still be performed in the event that there has been an intentional (i.e. authorized or directed by the user device 4) modification or alteration of the data file(s)/data block(s) stored by the second device 6 since the hash values were calculated by the user device 4. The 'data dynamics' could involve the creation of one or more new data blocks for a data file $F$, deleting one or more existing data blocks for a data file $F$ or modifying one or more existing data blocks for a data file $F$. Therefore after storing the data blocks at the second device 6, the user device 4 can later update/delete/create new data files or new data blocks for existing data files. In particular, the techniques provide that once the user device 4 has decided to do some data dynamics, e.g. to modify a data block, the user device's stored salted hash values can be updated accordingly. If a data block is deleted or created, the stored salted hash values must be reordered, and this order information should also be sent to the CSP 6 to enable the CSP 6 to calculate the correct hash value during the verification.

A homomorphic hash is a hash function that preserves the collusion-resistant property of traditional hash functions and also contains a special homomorphic property, and is usually defined as follows. Let $H:\{0,1\}^\lambda \to \{0,1\}^\kappa$ be a homomorphic hash function such that:

$$H(m + n) = H(m) \cdot H(n), \qquad\qquad (1)$$

where $\lambda$ and $\kappa$ are security parameters, $m$ and $n$ are hash inputs (i.e. inputs to the hash function $H$) from $\{0,1\}^\lambda$. "+" and "." are algebraic operations defined on $H(*)$.

In the techniques described herein, it is possible to use any secure and efficient homomorphic hash function. An exemplary homomorphic hash scheme that can be used in the techniques described herein is defined as follows.

A data file $F$ can be represented as a $m \times n$ matrix, and each cell in the matrix is an element from $Z_p$, where $Z_p$ is a finite field of mod $p$.

$$F = (b_1, b_2, \dots, b_n) = \begin{bmatrix} b_{1,1} & \cdots & b_{1,n} \\ \vdots & \ddots & \vdots \\ b_{m,1} & \cdots & b_{m,n} \end{bmatrix} \qquad\qquad (2)$$

Now, the $j$th column of $F$ simply corresponds to the $j$th data block of the file $F$, that is $b_j = (b_{1,j},\dots,b_{m,j})$. When adding two data blocks, two column vectors of $F$ are added. For instance, to add the $i$th and $j$th data blocks of the file $F$, the following is computed:

$$b_i + b_j = \left(b_{1,i} + b_{1,j}, ..., b_{m,i}b_{m,j}\right) \bmod q \qquad (3)$$

To compute the hash of a data block, the following is computed:

$$h_G(b_i) = \prod_{j=1}^{m} g_j^{b_{j,i}} \bmod p \qquad (4)$$

where $G = (p, q, g)$ is a set of hash parameters, and $p$ and $q$ are two large random primes, and $g$ is a 1 x $m$ row vector, composed of random elements of $Z_p$, all order $q$. The hash value of the data file $F$ is defined as a 1 x $n$ row vector, whose elements are the hashes of its constituent data blocks:

$$H_G(F) = (h_G(b_1), h_G(b_2), ..., h_G(b_n)) \qquad (5)$$

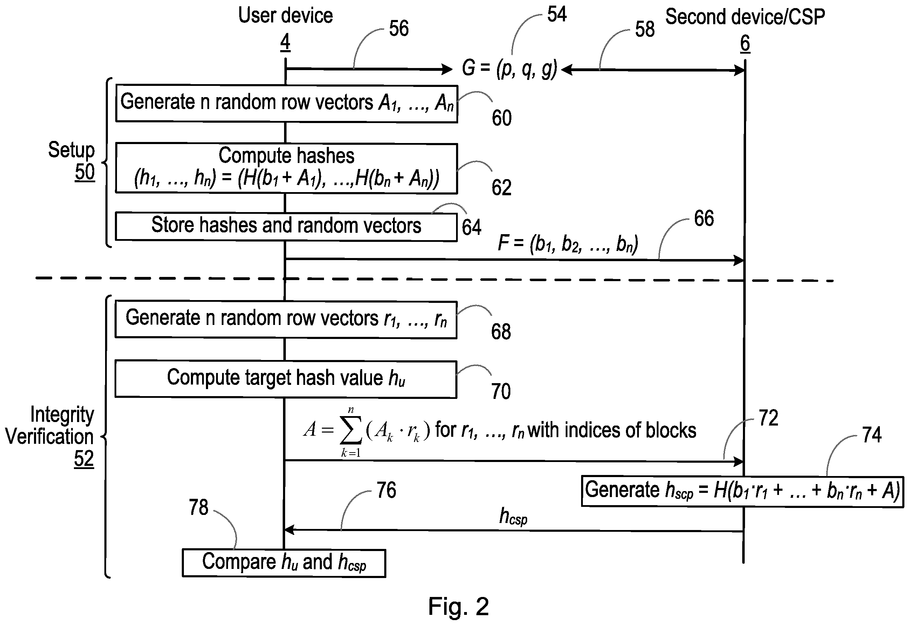

An exemplary implementation of the techniques disclosed herein is described below with reference to the signaling and flow diagram in Fig. 2. Fig. 2 shows the operations of a user device (first device) 4 and CSP (second device) 6 in a setup phase 50 and an integrity verification phase 52. In this example, it is assumed that the user device 4 is both the device that provides the data file $F$ to the CSP 6 for storage and the device that performs the integrity verification, but those skilled in the art will readily appreciate that the data file $F$ can be provided to the CSP 6 for storage by a separate device to the user device 4.

To perform the techniques, the following are defined. Let $F = (b_1, b_2, ..., b_n)$ be a file with $n$ data blocks, and let $H:\{0,1\}^{\lambda} \rightarrow \{0,1\}^{\kappa}$ be a homomorphic hash function as described above. The hash function parameters 54 ($G = (p, q, g)$) are available and/or accessible to both the user device 4 (indicated by arrow 56) and the CSP 6 (indicated by arrow 58).

In the setup phase 50, the user device 4 randomly selects or generates a set of 1 x $m$ column vectors, with the set including a column vector for each data block (step 60). These column vectors are denoted $A_1,...,A_n$. In step 62, the user device 4 uses these random column vectors to compute salted hash values for each data block $b_i (i = 1,...,n)$. The salted hash values are given by:

$$(h_1, ..., h_n) = (H(b_1 + A_1), ..., H(b_n + A_n)) \qquad (6)$$

The user device 4 stores all the hash values and random vectors locally (step 64). The user device 4 sends the data file $F$ comprising the $n$ data blocks to the CSP 6 (signal 66). The user device 4 then deletes the data file $F$ so that the data blocks are not available at the user device 4.

When performing a data integrity verification of data file $F$ in the integrity verification phase 52, the user device 4 first computes a set of $n$ random 1 x $n$ row vectors (step 68), which are denoted $r_1, ..., r_n$. The user device 4 computes a target hash value (step 70) using the following equation:

$$h_U = H((b_1 + A_1) \cdot r_1 + \cdots + (b_n + A_n) \cdot r_n) = \prod_{k=1}^{n} H((b_k + A_k) \cdot r_k) \qquad (7)$$

However, it will be appreciated that as the user device 4 does not have the data blocks available (since they were deleted), it is not possible for the user device 4 to calculate the target hash value exactly as shown in equation (7). Instead, it will be noted that

$$H((b_k + A_k) \cdot r_k) = h_k^{\,r_{k,1} + r_{k,2} + \cdots + r_{k,n}} \qquad (8)$$

where $r_k = (r_{k,1}, r_{k,2}, ..., r_{k,n})$, and so substituting equation (8) into equation (7) enables that the user device 4 to calculate the target hash value $h_U$ as the user device 4 has the hash values $h_k$ available.

The user device 4 then sends to the CSP 6 (shown by signal 72) the row vectors $r_1, ..., r_n$, together with a combination $A$ of the row vectors and the column vectors $A_k$:

$$A = \sum_{k=1}^{n}(A_k \cdot r_k) \qquad\qquad (9)$$

In addition, the user device 4 may need to send an order of indices of challenged data blocks to the CSP 6 (e.g. indicating the correspondence between the row vectors $r_1, \ldots, r_n$ and the data blocks $n$), particularly in the case where the integrity verification is only being performed for a subset of the data blocks. It will be noted that $A_k \cdot r_k$ is a $m$ x $n$ matrix (which derives from the row vector multiplied by the column vector). $A$ is thus a $m$ x $n$ matrix formed from the sum of the $m$ x $n$ matrices for $A_k \cdot r_k$.

At the CSP 6, to honestly (i.e. correctly) generate a test hash value, the CSP 6 is to compute, in step 74:

$$h_{CSP} = H(b_1 \cdot r_1 + \cdots + b_n \cdot r_n + A) \qquad\qquad (10)$$

If computed correctly, the hash value $h_{CSP}$ according to equation (10) will match the hash value $h_U$ according to equation (7), otherwise the CSP 6 will not pass the verification. The CSP 6 sends $h_{CSP}$ to the user device 4 (signal 76).

The user device 4 then compares $h_U$ to $h_{CSP}$ (step 78) and the integrity check is passed if they match. If they do not match, then the user device 4 can assume that the CSP 6 has modified or deleted one or more of the $n$ data blocks.

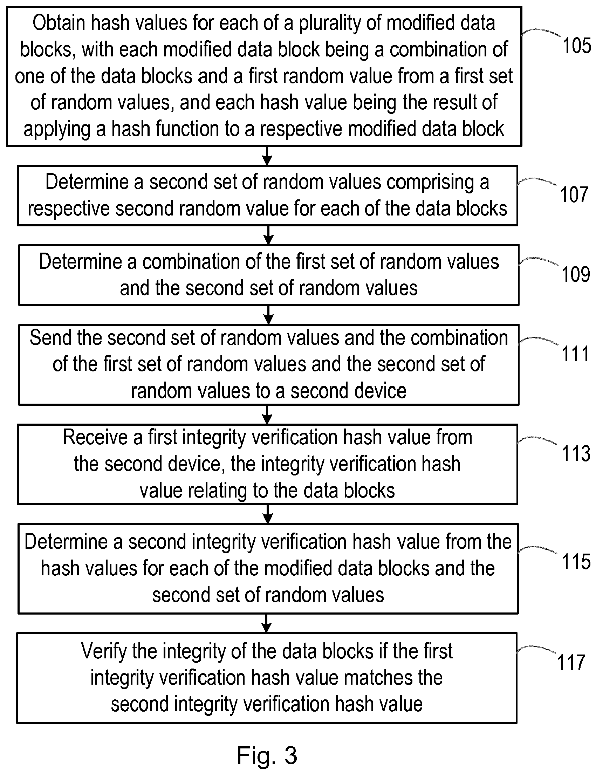

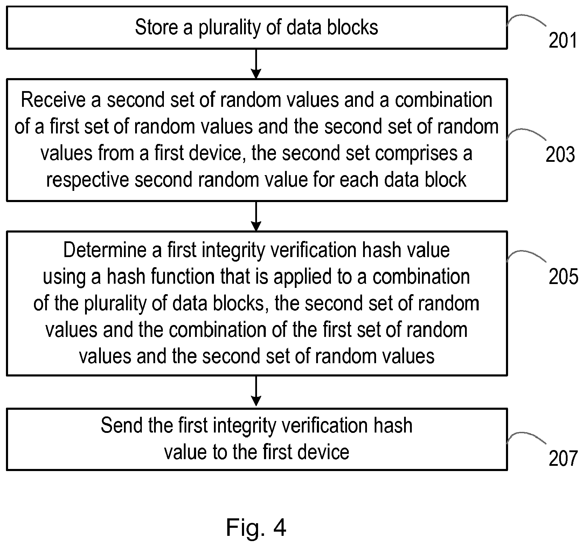

More general embodiments of the techniques disclosed herein are now described with reference to the flow charts in Figs. 3 and 4. Fig. 3 is a flow chart illustrating a method of operating a first device (e.g. a user device) 4 to perform an integrity verification of data blocks stored at a second device (CSP) 6, and Fig. 4 is a flow chart illustrating a method of operating a second device (CSP) 6. It will be appreciated that the order of some of the steps presented in Figs. 3 and 4 is merely exemplary and it may be possible for the order of one or more of the illustrated steps to be changed or altered from that shown.

The method steps in the flow chart of Fig. 3 can be performed by the processing unit 12 and interface circuitry 10 in the first device 4. In some embodiments, computer program code can be provided that causes the processing unit 12 and/or interface circuitry 10 to operate according to the method shown in Fig. 3. Likewise, the method steps in the flow chart of Fig. 4 can be performed by the processing unit 18 and interface circuitry 16 in the second device 6. In some embodiments, computer program code can be provided that causes the processing unit 18 and/or interface circuitry 16 to operate according to the method shown in Fig. 4.

The methods in Figs. 3 and 4 relate to verifying the integrity of a plurality of data blocks, and in particular $n$ data blocks, where $n$ is greater than 1. The plurality of data blocks may be from a single data file $F$, or from multiple data files $F$. In the former case, the plurality of data blocks to be verified by the methods in Figs. 3 and 4 may be all or a subset (i.e. less than all) of the data blocks for the data file $F$. In the latter case, the plurality of data blocks to be verified by the methods in Figs. 3 and 4 may be all or a subset (i.e. less than all) of the data blocks for the multiple data files $F$. As noted above, a data file $F$ may be any type of data file, including, but not limited to, a document, an image, a video, an executable file, or a data file for use by a program, etc.

In a first step of Fig. 3 (step 105), the first device 4 obtains hash values for each of a plurality of modified data blocks. Each modified data block is a combination of one of the data blocks in the plurality and a first random value from a first set of random values. Each hash value is the result of applying a hash function to a respective modified data block. The first set comprises a respective first random value $A_k$ for each of the $n$ data blocks. In some embodiments, each first random value can be a random vector. In some embodiments, particularly where each data block is represented by a $m$ x 1 column vector, each first random value can be a random $m$ x 1 column vector. The hash function is preferably a homomorphic hash function, and satisfies the property $h(s + t) = h(s) \cdot h(t)$ where $s$ and $t$ are inputs to the homomorphic hash function. In particular embodiments, where each data block is represented by a $m$ x 1 column vector, the hash function can be as defined in equation (4) above.

In some embodiments, for example where the first device 4 is the device that owns the data file/data blocks and sends them to the second device 6 for storage, or where the first device 4 receives a copy of the data file/data blocks from the data owner (e.g. a third device) to enable a subsequent verification of the integrity of those data blocks when they are stored by the second device 6, the first device 4 can determine the hash values for the plurality of modified data blocks. In particular, the first device 4 can determine a first set of random values. The first device 4 then determines a modified data block from each data block and a respective one of the first random values. This effectively 'salts' the data block before a hash value is determined for the data block. In some embodiments, the modified data block is formed by summing each data block and the respective first random value, although it will be appreciated that a data block and first random value can be combined in other ways, for example a modified data block could be formed as a product of a data block and a respective first random value. In particular those skilled in the art will appreciate that the type of hash function used in the algorithm can determine the type(s) of combination that can be used in this step, and also the form of the first random values (e.g. column vectors, numerical values, etc.).

Next the first device 4 applies a hash function to each of the modified data blocks to determine respective hash values (denoted $h_i$ for the $i$th modified data block) for each of the modified data blocks.

In alternative embodiments, for example where the first device 4 is not the device that owns the data file/data blocks, step 105 can comprise the first device 4 obtaining the hash values for the plurality of modified data blocks by receiving the hash values for the plurality of modified data blocks from another device. For example, a data owner (e.g. a third device) can compute or determine the hash values for the plurality of modified data blocks (e.g. according to the process set out above) and send them to the first device 4 for use in a subsequent integrity verification process. This embodiment can include the first device 4 receiving the hash values for the plurality of modified data blocks and storing them in the memory unit 14 for use during a subsequent integrity verification procedure.

After either embodiment of step 105, the first device 4 has all of the information required to subsequently perform an integrity verification of the plurality of data blocks stored at the second device 6. The first device 4 can store the hash values $h_i$ for the plurality of data blocks, and also store the first set of random values.

In some embodiments, if the plurality of data blocks are not already stored at the second device 6, the plurality of data blocks can be sent to the second device 6 for storage. The sending of the data blocks may be performed by the first device 4 (e.g. if the first device 4 is the owner of the data blocks), or it can be performed by another device (e.g. a third device). In either case, the second device 6 receives a plurality of data blocks (this step isn't shown in Fig. 4), and stores them (step 201 of Fig. 4). Also in either case, the first device 4 can delete or discard the plurality of data blocks so that they are not available or stored at the first device 4 when an integrity verification is to be performed.

The following steps of the method (steps 107-117) relate generally to the integrity verification phase of the method, and can be performed some time after step 105 is performed. However, it will be appreciated that some of steps 107, 109 and 115 could also be performed during the set up phase (step 105), or performed some time before the integrity verification actually takes place.

In step 107, the first device 4 determines a second set of random values. The second set comprises a respective second random value $r_k$ for each of the $n$ data blocks. In some embodiments, each second random value can be a random vector. In some embodiments, particularly where each data block is represented by a $m \times 1$ column vector and each first random value is a random $m \times 1$ column vector, each second random value can be a random $1 \times n$ row vector.

In step 109, the first device 4 determines a combination of the first set of random values and the second set of random values. In some embodiments, the combination of the first set of random values and the second set of random values is an $m \times n$ matrix. In some embodiments, the combination of the first set of random values and the second set of random values is as set out in equation (9). However, those skilled in the art will appreciate that other types of combination of the first set of random values and the second set of random values are possible. In particular those skilled in the art will appreciate that the type of combination can depend on the type of hash function used in the algorithm, and also depend on the way in which the first random values are used to modify the data blocks before the hash values are determined.

Next, in step 111, the first device 4 sends information to the second device 6 to enable the second device 6 to compute an integrity verification hash value. In particular the first device 4 sends the second set of random values $r_k$ and the combination of the first set of random values and the second set of random values (A) to the second device 6.

Turning now to Fig. 4 (the method in the second device 6), the second device 6 receives the second set of random values $r_k$ and the combination of the first set of random values and the second set of random values (A) from the first device 4 (step 203).

Next, in step 205, the second device 6 determines a first integrity verification hash value using the hash function. In particular the second device 6 applies the hash function to a combination of the plurality of data blocks stored in step 201, the second set of random values and the combination of the first set of random values and the second set of random values received in step 203.

In some embodiments, step 205 can comprise determining a product of each data block with the respective second random value, summing the determined products and the combination of the first set of random values and the second set of random values, and applying the hash function to the result of the summing to determine the first integrity verification hash value. In particular embodiments, step 205 can comprise determining the first integrity verification hash value as shown in equation (10).

The second device 6 then sends the first integrity verification hash value to the first device 4 (step 207).

Returning to Fig. 3, the first device 4 receives the first integrity verification hash value from the second device 6 (step 113).

In step 115, the first device 4 determines a second integrity verification hash value from the hash values $h_k$ for each of the modified data blocks and the second set of random values. In particular embodiments, the second integrity hash value can be calculated according to equations (7) and (8) above, and so $h_U$ can be calculated as follows:

$$h_U = \prod_{k=1}^{n} h_k^{\ r_{k,1}+r_{k,2}+\cdots+r_{k,n}} \qquad\qquad (11)$$

where $h_k$ is the result of applying the hash function to the $k$th modified data block, the $k$th modified data block is determined as $b_k + A_k$, where $b_k$ is the $k$th data block, $A_k$ is the first random vector in the first set of random values for the $k$th data block and $r_k$ is the second random vector in the second set of random values for the $k$th data block, with $r_k$ comprising $n$ vector components denoted $r_{k,c}$, with $c$ = 1 to $n$.

It will be appreciated that in some embodiments step 115 can be performed before receiving the first integrity verification hash value in step 113. In addition, in some embodiments step 115 can be performed before sending the second set of random values and the combination of the first set of random values and the second set of random values in step 111.

After receiving the first integrity verification hash value and determining the second integrity hash value, the first device 4 compares the first integrity verification hash value to the second integrity verification hash value (step 117). The integrity of the plurality of data blocks can be verified if the two integrity verification hash values match. If there is a mismatch between the two integrity verification hash values, then the first device 4 can determine that the second device 6 did not honestly compute the hash value, and this may be due to the second device 6 having deleted or modified one or more of the plurality of data blocks without authorization or knowledge from the first device 4.

In some embodiments, the method of Fig. 3 can further comprise the first device 4 sending an order of indices of data blocks to the second device 6. The order of indices indicates the relationship between the second random values in the second set and the stored data blocks. This additional step may be useful where not all of the data blocks stored by the second device 6 are to be verified (i.e. it is where the integrity verification relates to a subset of the stored data blocks. For example, a data file $F$ may comprise three data blocks $b_1$, $b_2$ and $b_3$, and the verification may only relate to data blocks $b_1$ and $b_3$. In that case, sending an order of indices of data blocks can means sending an order 1, 3 indicating that data blocks $b_1$ and $b_3$ are to be verified, and indicating which of those data blocks the second random values sent in step 111 relate to.

As noted above, the techniques described herein support 'data dynamics', which could involve any one or more of the creation of one or more new data blocks for a data file $F$, deleting one or more existing data blocks for a data file $F$ or modifying one or more existing data blocks for a data file $F$. In this case, if the 'data dynamics' occur after step 105 and before a verification (step 107 onwards), then the first device 4 can update the stored hash values (as appropriate based on the particular 'dynamic'), and the 'data dynamic' can be communicated to the second device 6. The 'data dynamics' can be effected by the first device 4 (particularly where the first device 4 is also the data owner, but possibly also in the case where the data originated from a third device), or by a third device in the case where the third device is the owner of the data file/data blocks.

For example, if a data block is added or created, then the first device 4 can determine a new first random value for the data block (similar to step 101) and determine a 'salted hash' for the new data block (similar to steps 103 and 105). This salted hash can be stored with the other hash values, and the new data block stored at the second device 6. Verification of the stored data blocks (including the new data block) can then proceed as described above in steps 109-117 and 205 (e.g. including determining a second random value for the new data block and determining the second integrity verification hash value from the hash value for the new data block (and the pre-existing data blocks)). It will be appreciated that the creation or addition of a data block may require the indices of the data blocks and random values (from the first and/or second set) to be updated or revised, in which case the first device 4 can communicate the correct order of indices to the second device 6.

As another example, if a data block stored at the second device 6 is deleted, then the first device 4 can discard the first random value for that data block (that was determined in step 101) and discard the 'salted hash' for the deleted data block (that was determined in step 105). The deletion of the data block can be communicated to the second device 6, and the second device 6 can delete the relevant data block. Verification of the remaining stored data blocks can then proceed as described above in steps 109-117 and 205. It will be appreciated that the deletion of a stored data block may require the indices of the data blocks and random values (from the first and/or second set) to be updated or revised, in which case the first device 4 can communicate the correct order of indices to the second device 6.

As another example, if a stored data block is to be modified, then the first device 4 can determine a new first random value for the data block or use the existing first random value for the data block and determine a new 'salted hash' for the modified data block (similar to steps 103 and 105). This salted hash can be stored with the other hash values in place of the original hash value for the data block that is modified. The modification of the data block can be communicated (e.g. in terms of an instruction for how the data block is to be modified or in terms of the modified data block itself) to the second device 6. Verification of the stored data blocks (including the modified data block) can then proceed as described above in steps 109-117 and 205 (e.g. including determining a second random value for the modified data block and determining the second integrity verification hash value from the hash value for the modified data block (and the other unmodified data blocks)). It will be appreciated that the modification of a data block may require the indices of the data blocks and random values (from the first and/or second set) to be updated or revised (although in some embodiments the index of the modified data block may be unchanged), in which case the first device 4 can communicate the correct order of indices to the second device 6.

There is therefore provided improved techniques for enabling a user to check the integrity of data stored by a CSP or other storage device or storage facility.

Variations to the disclosed embodiments can be understood and effected by those skilled in the art in practicing the principles and techniques described herein, from a study of the drawings, the disclosure and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used to advantage. A computer program may be stored or distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

## Claims

1. A computer-implemented method of operating a first device to verify the integrity of a plurality of data blocks stored by a second device, the method comprising:

    (i) obtaining hash values for each of a plurality of modified data blocks, wherein each modified data block is a combination of one of the data blocks and a first random value from a first set of random values, and each hash value is a result of applying a hash function to a respective modified data block;
    (ii) determining a second set of random values, wherein the second set comprises a respective second random value for each of the data blocks;
    (iii) determining a combination of the first set of random values and the second set of random values;
    (iv) sending, to the second device, the second set of random values and the combination of the first set of random values and the second set of random values;
    (v) receiving, from the second device, a first integrity verification hash value, the integrity verification hash value relating to the plurality of data blocks;
    (vi) determining a second integrity verification hash value from the hash values for each of the modified data blocks and the second set of random values; and
    (vii) verifying integrity of the plurality of data blocks if the first integrity verification hash value matches the second integrity verification hash value.

2. The computer-implemented method as claimed in claim 1, wherein step (i) comprises:

    determining the first set of random values, wherein the first set comprises a respective first random value for each of the data blocks;
    for each of the plurality of data blocks, determining a modified data block as a combination of the data block and the first random value; and
    applying the hash function to each of the modified data blocks to determine hash values for each of the modified data blocks.

3. The computer-implemented method as claimed in claim 1, wherein step (i) comprises obtaining the hash values for each of the plurality of modified data blocks from a third device.

4. The computer-implemented method as claimed in claim 1, 2 or 3, wherein the modified data block is a sum or product of a data block and the first random value.

5. The computer-implemented method as claimed in any of claims 1-4, wherein step (iv) further comprises sending, to the second device, an order of indices of data blocks.

6. The computer-implemented method as claimed in any of claims 1-5, wherein each data block is represented by a $m \times 1$ column vector, each first random value is a random $m \times 1$ column vector; each second random value is a random $1 \times n$ row vector, where $n$ is the number of data blocks.

7. The computer-implemented method as claimed in claim 6, wherein step (vi) comprises determining the second integrity verification hash value by evaluating:

$$h_U = \prod_{k=1}^{n} h_k^{\ r_{k,1}+r_{k,2}+\cdots+r_{k,n}}$$

where $h_k$ is a result of applying the hash function to the $k$th modified data block, the $k$th modified data block is determined as $b_k + A_k$, where $b_k$ is the $k$th data block, $A_k$ is a first random vector in the first set of random values for the $k$th data block and $r_k$ is a second random vector in the second set of random values for the $k$th data block, with $r_k$ comprising $n$ vector components denoted $r_{k,c}$, with $c = 1$ to $n$.

8. The computer-implemented method as claimed in claim 6 or 7, wherein step (iii) comprises determining the combination A as:

$$A = \sum_{k=1}^{n}(A_k \cdot r_k)$$

where $A_k$ is a first random vector in the first set of random values for the $k$th data block, $r_k$ is a second random vector in the second set of random values for the $k$th data block.

9. The computer-implemented method as claimed in any of claims 1-8, wherein the hash function is a homomorphic hash function $h$ that satisfies the property $h(s + t) = h(s) \cdot h(t)$, where $s$ and $t$ are inputs to the homomorphic hash function..

10. The computer-implemented method as claimed in any of claims 1-9, wherein the hash function is given by:

$$h_G(b_i) = \prod_{j=1}^{m} g_j^{\ b_{j,i}} \bmod p$$

where $b_i$ is the $i$th data block represented as a m x 1 column vector, $b_{j,i}$ is the $j$th vector component of $b_i$, $G = (p, q, g)$ is a set of hash parameters, with $p$ and $q$ being random prime numbers, g being a 1 x m row vector composed of random elements of $Z_p$ of order $q$.

11. The computer-implemented method as claimed in any of claims 1-10, wherein the method further comprises the step of:
    storing the hash values for each of the modified data blocks at the first device.

12. The computer-implemented method as claimed in of claims 1-11, wherein the method further comprises the steps of:

    sending, to the second device, the plurality of data blocks for storage by the second device; and
    deleting or discarding the plurality of data blocks at the first device.

13. The computer-implemented method as claimed in any of claims 1-12, wherein, in the event that a data block in the plurality of data blocks is changed, the method further comprises the steps of:

    discarding the hash value for the data block that is changed;
    for the data block that is changed, determining a modified data block for the data block that is changed as a combination of the data block that is changed and the first random value;
    applying the hash function to the modified data block for the data block that is changed to determine a hash value for the data block that is changed; and
    using the hash value for the changed data block in step (vi) to determine the second integrity verification hash value.

14. The computer-implemented method as claimed in any of claims 1-13, wherein, in the event that a data block in the plurality of data blocks is deleted, the method further comprises the steps of:

discarding the hash value for the deleted data block; and
performing step (vi) to determine the second integrity verification hash value from the remaining hash values.

15. The computer-implemented method as claimed in any of claims 1-14, wherein, in the event that a new data block is added to the plurality of data blocks, the method further comprises the steps of:

determining a first random value for the new data block;
for the new data block, determining a modified data block for the new data block as a combination of the new data block and the first random value;
applying the hash function to the modified data block for the new data block to determine a hash value for the new data block; and
using the hash value for the new data block in step (vi) to determine the second integrity verification hash value.

Fig. 1

User device  ⌒56     ⌒54    ⌒58   Second device/CSP
**4**                $G = (p, q, g)$                **6**

**Setup**
**50**

Generate n random row vectors $A_1, ..., A_n$  ⌒60

Compute hashes
$(h_1, ..., h_n) = (H(b_1 + A_1), ..., H(b_n + A_n))$  ⌒62

Store hashes and random vectors  ⌒64

$F = (b_1, b_2, ..., b_n)$  ⌒66

**Integrity Verification**
**52**

Generate n random row vectors $r_1, ..., r_n$  ⌒68

Compute target hash value $h_u$  ⌒70

$A = \sum_{k=1}^{n} (A_k \cdot r_k)$ for $r_1, ..., r_n$ with indices of blocks  ⌒72  ⌒74

Generate $h_{scp} = H(b_1 \cdot r_1 + ... + b_n \cdot r_n + A)$

⌒76    $h_{csp}$

78  Compare $h_u$ and $h_{csp}$

Fig. 2

Obtain hash values for each of a plurality of modified data blocks, with each modified data block being a combination of one of the data blocks and a first random value from a first set of random values, and each hash value being the result of applying a hash function to a respective modified data block    105

Determine a second set of random values comprising a respective second random value for each of the data blocks    107

Determine a combination of the first set of random values and the second set of random values    109

Send the second set of random values and the combination of the first set of random values and the second set of random values to a second device    111

Receive a first integrity verification hash value from the second device, the integrity verification hash value relating to the data blocks    113

Determine a second integrity verification hash value from the hash values for each of the modified data blocks and the second set of random values    115

Verify the integrity of the data blocks if the first integrity verification hash value matches the second integrity verification hash value    117

Fig. 3

EP 3 591 563 A1

Store a plurality of data blocks 201

Receive a second set of random values and a combination of a first set of random values and the second set of random values from a first device, the second set comprises a respective second random value for each data block 203

Determine a first integrity verification hash value using a hash function that is applied to a combination of the plurality of data blocks, the second set of random values and the combination of the first set of random values and the second set of random values 205

Send the first integrity verification hash value to the first device 207

Fig. 4

Europäisches Patentamt

European Patent Office

Office européen des brevets

# EUROPEAN SEARCH REPORT

**Application Number**

EP 18 18 1654

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | LI YU; JUNYAO YE; KENING LIU: "Provable Data Possession Scheme based on Homomorphic Hash Function in Cloud Storage", ACSIJ ADVANCES IN COMPUTER SCIENCE: AN INTERNATIONAL JOURNAL, vol. 5, no. 19, January 2016 (2016-01), XP055512395, * abstract * * Sections 1-3; figures 1-7 * | 1-15 | INV. G06F21/64 H04L29/06 H04L9/32 |
| A | CA 2 936 106 A1 (KAMALUDEEN MIRZA [CA]) 14 January 2018 (2018-01-14) * abstract * * Section 2.2 * | 1-15 | |
| A | TAN CHOON BENG ET AL: "A survey on Proof of Retrievability for cloud data integrity and availability: Cloud storage state-of-the-art, issues, solutions and future trends", JOURNAL OF NETWORK AND COMPUTER APPLICATIONS, ACADEMIC PRESS, NEW YORK, NY, US, vol. 110, 16 March 2018 (2018-03-16), pages 75-86, XP085374863, ISSN: 1084-8045, DOI: 10.1016/J.JNCA.2018.03.017 * abstract * * Sections 3, 4 * | 1-15 | TECHNICAL FIELDS SEARCHED (IPC) G06F H04L |

The present search report has been drawn up for all claims

| Place of search | Date of completion of the search | Examiner |
|---|---|---|
| Munich | 5 October 2018 | Jakob, Gregor |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 18 18 1654

This annex lists the patent family members relating to the patent documents cited in  the above-mentioned European search report.
The members are as contained in the European Patent Office EDP file on
The European Patent Office is in no way liable for these particulars which are merely given for the purpose of information.

05-10-2018

| Patent document cited in search report | | Publication date | Patent family member(s) | Publication date |
|---|---|---|---|---|
| CA 2936106 | A1 | 14-01-2018 | NONE | |

EPO FORM P0459

For more details about this annex : see Official Journal of the European Patent Office, No. 12/82

**EP 3 591 563 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **LI YU ; JUNYAO YE ; KENING LIU.** Provable Data Possession Scheme based on Homomorphic Hash Function in Cloud Storage. *ACSIJ Advances in Computer Science: an International Journal,* January 2016, vol. 5 (19